# EUROPEAN PATENT APPLICATION

(11) **EP 4 822 552 A1**
(43) Date of publication of application: **14.10.2026**
(21) Application number: 25168937.8
(22) Date of filing: 07.04.2025
(51) Int. Cl.: G06F 16/332, G06F 16/334

(54) **RETRIEVAL-AUGMENTED GENERATION (RAG) SYSTEM AND METHOD**

(71) Applicant: Hitachi Energy Ltd, 8050 Zürich (CH)
(72) Inventor: KUMAR SAHA, Barun, 713212 Durgapur (IN); AN, Praveen, 11160 Dubai (AE)
(74) Representative: Vossius & Partner Patentanwälte Rechtsanwälte mbB

(57) **Abstract**

The present disclosure relates to a retrieval-augmented generation (RAG) system. The system comprises a controller node configured to receive a query, a plurality of retriever nodes provided in parallel to each other and communicatively coupled to the controller node, an evaluation node communicatively coupled to the plurality of retriever nodes, and a language model (LM) node communicatively coupled to the evaluation node and the plurality of retriever nodes. The controller node is configured to forward the query to the plurality of retriever nodes, the plurality of retriever nodes are configured to simultaneously generate, based on the query, respective intermediate responses, the evaluation node is configured to receive the respective intermediate responses and assign a score to each of the intermediate responses, and the LM node is configured to generate a final response based on the intermediate responses and the assigned score.

## Description

The present disclosure relates to a retrieval-augmented generation (RAG) system and method as well as a corresponding computer program product and computer-readable storage medium.

Retrieval-Augmented Generation (RAG), in which a Large Language Model (LLM) generates a response to a query based on available context, has become widely used in various application fields. However, it is difficult to tailor the responses to a current user and/or current question or to provide a fine-tuning of such retrieval systems.

In many applications of RAG, there is no fine-tuning of any LLM per se and often a previously trained LLM is used as it is. Therefore, the performance of RAG in terms of useful responses generated largely depends on how and what context are retrieved.

Contemporary approaches, which consider and evaluate different retrieval and response generation techniques, typically optimise RAG for "all users," in general. For example, in general, it cannot distinguish between users who want crisp versus verbose responses or users who want only text versus images with text. In addition, there can be other discriminating factors for retrievers, such as response language and query topic. Moreover, content processing for code would be different from the processing for technical manuals.

An object of the present disclosure is therefore to remedy the above deficiencies. In particular, the present disclosure is able to tune a retrieval system to be aligned with user preferences. This object is met with the features of the independent claims.

The invention is specified by the independent claims. Preferred embodiments are defined in the dependent claims. In the following description, although numerous features may be designated as optional, it is nevertheless acknowledged that all features comprised in the independent claims are not to be read as optional.

The present disclosure relates to a retrieval-augmented generation (RAG) system. The system comprises a controller node configured to receive a query, a plurality of retriever nodes provided in parallel to each other and communicatively coupled to the controller node, an evaluation node communicatively coupled to the plurality of retriever nodes, and a language model (LM) node communicatively coupled to the evaluation node and the plurality of retriever nodes. The controller node is configured to forward the query to the plurality of retriever nodes, the plurality of retriever nodes are configured to simultaneously generate, based on the query, respective intermediate responses, the evaluation node is configured to receive the respective intermediate responses and assign a score to each of the intermediate responses, and the LM node is configured to generate a final response based on the intermediate responses and the assigned score.

Various embodiments may preferably implement the following features.

Preferably, the controller node is configured to receive and output the final response.

Preferably, the system comprises at least one data storage.

Preferably, each retriever node is communicatively coupled to at least one of the at least one data storage and configured to generate the response based on data from the data storage.

Preferably, the evaluation node is configured to assign an LM score to each intermediate response. Preferably, the evaluation node is configured to assign the score based on the LM score. Preferably, the LM score is assigned for each query.

Preferably, the evaluation node is configured to assign the score based on user feedback to the intermediate responses associated with a query.

Preferably, the evaluation node is configured to assign the score based on user feedback to the intermediate responses associated with a respective retriever.

Preferably, the LM score and the user feedback are stored in respective matrices. Preferably, the evaluation node is configured to generate a combined matrix based on the LM score matrix and at least one of the user feedback matrices.

Preferably, the evaluation node is configured to generate a matrix based on average feedback of a user based on the query and the intermediate responses provided by the retriever nodes.

Preferably, the evaluation node is configured to generate a matrix based on average feedback of a user on the intermediate responses provided by the retriever nodes.

Preferably, the plurality of retriever nodes are grouped into a plurality of groups. Preferably, each group comprises at least one retriever node.

Preferably, the plurality of retriever nodes are configured to generate the intermediate responses in parallel. Preferably, the plurality of retriever nodes are distributed receivers.

Preferably, the system comprises at least one sensor, device, power equipment, or asset communicatively coupled to the controller node. Preferably, the at least one sensor, device, power equipment, or asset is configured to generate and transmit the query to the controller node.

Preferably, the query is user generated or automatically generated.

Preferably, the controller node is configured to adapt at least one parameter of the sensor, device, power equipment, or asset or of at least one component of the device, power equipment, or asset based on the final response.

Preferably, each of the plurality of retriever nodes is configured to use the same or different LM and/or GenAl models, data storages, indices and documents for generating the respective intermediate responses.

Preferably, the controller node is configured to generate at least one new retriever based on the plurality of retriever nodes and/or intermediate responses and/or final responses and/or score and/or LM score.

The present disclosure further relates to a method for a retrieval-augmented generation (RAG) system, the system comprising a controller node configured to receive a query, a plurality of retriever nodes provided in parallel to each other and in communication with the controller node, an evaluation node in communication with the plurality of retriever nodes, and a large language model (LM) node in communication with the evaluation node and the plurality of retriever nodes. The method comprises forwarding, by the controller node, the query to the plurality of retriever nodes, simultaneously generating, by the plurality of retriever nodes, respective intermediate responses based on the query, receiving, by the evaluation node, the respective intermediate responses and assigning a score to each of the intermediate responses, and generating, by the LM node, a final response based on the intermediate responses and the assigned score.

The present disclosure further relates to a computer program product comprising instructions for execution by at least one processor for configuring the at least one processor to perform the method as outlined above.

The present disclosure further relates to a computer-readable storage medium comprising instructions for execution by at least one processor for configuring the at least one processor to perform the method as outlined above.

Other aspects, features, and advantages will be apparent from the summary above, as well as from the description that follows, including the figures and the claims.

Embodiments of the present disclosure will now be described by way of example only and with reference to the following accompanying drawings. In the figures, the same reference numerals denote the same or similar elements.
Fig. 1 shows a schematic diagram of a system according to an embodiment of the present disclosure.
Fig. 2 shows a schematic diagram of a system according to an embodiment of the present disclosure.

In the present disclosure, the terms "retriever" and "retriever node(s)" may be used synonymously. The same applies to "evaluator"/"evaluation node(s)". Further, a Large Language Model (LLM) may be used as an example of a Language Model (LM), but the present disclosure is not limited thereto.

As outlined above, an object of the present disclosure is to provide a retrieval system, in particular a RAG system, which is able to adapt to user's needs and preferences. That is, the present disclosure relates to how to make the same RAG application behave and respond to the largely different preferences of different users, e.g., in terms of language, verbosity, and content type. To address this problem, a distributed retrieval system is considered, running multiple retrievers and evaluator(s).

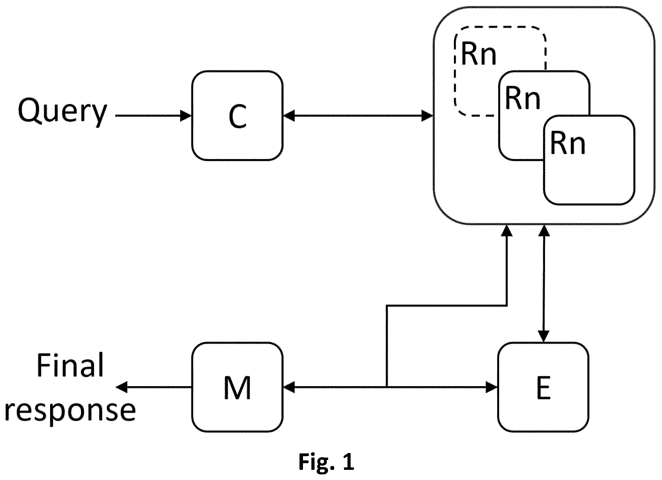

The present disclosure relates to a retrieval-augmented generation (RAG) system as schematically shown in Fig. 1.

The system comprises a controller node C configured to receive a query, a plurality of retriever nodes R1, R2, ...., Rn (denoted as "Rn" in Fig. 1) provided in parallel to each other and communicatively coupled to the controller node C, an evaluation node E communicatively coupled to the plurality of retriever nodes Rn, and a language model (LM) node M communicatively coupled to the evaluation node E and the plurality of retriever nodes Rn. The controller node C is configured to forward the query to the plurality of retriever nodes Rn, the plurality of retriever nodes Rn are configured to simultaneously generate, based on the query, respective intermediate responses, the evaluation node E is configured to receive the respective intermediate responses and assign a score to each of the intermediate responses, and the LM node M is configured to generate a final response based on the intermediate responses and the assigned score.

The final response may be sent to another entity, such as a display, a GUI, a server, a computer, a mobile terminal, etc. and output. Also, the controller node C may be configured to receive and output the final response.

In some cases, it may be advantageous for the LM node M to directly output the final response. However, it may also be advantageous in some cases to utilise the controller node C to output the final response.

For example, if the controller node C sends the same query q to two retrievers, R1 and R2, which uses two (Large) Language Models LLMs, LM1 and LM2, respectively. Here, the controller C may need to relay back both the responses. This may be done, e.g., present a user with different responses prior to determining the final response suiting the query and the user. In that case, having an LM node respond back directly might not offer the desired flexibility. In some cases, there might therefore be a plurality of potential final responses output by the controller node C from which one is to be selected.

The controller node C may thus serve as an interface between a user, the retriever nodes Rn and the LM node M.

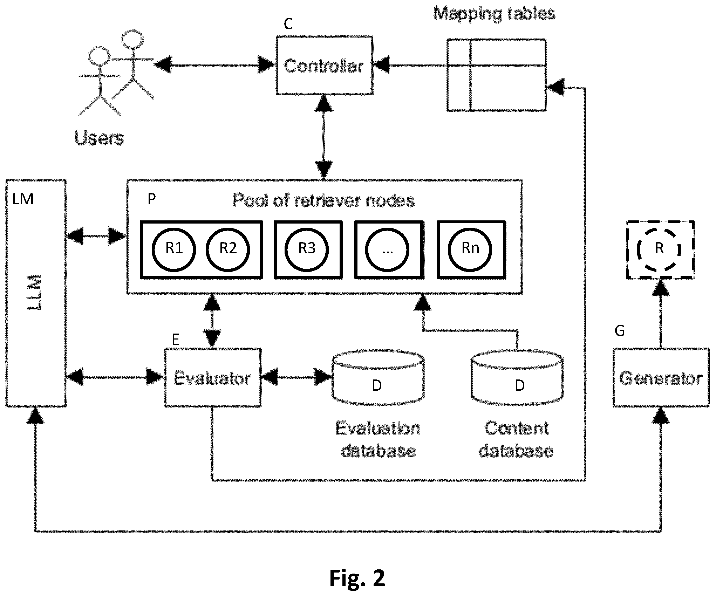

In an embodiment, the system comprises at least one data storage. In Fig. 2, two data storages D (Evaluation database and Content database) are shown, but the present disclosure is not limited to this configuration. The data storages/databases may be configured as, e.g., a vector database or a graph database. Said databases may be searchable by a vector search or a graph search.

Each retriever node Rn may be communicatively coupled to at least one of the at least one data storage D and configured to generate the response based on data from the data storage D. Further, the evaluation node E may be configured to assign an LM score to each intermediate response. The evaluation node E may be configured to assign the score based on the LM score. The LM score may be assigned for each query.

As noted above, the (intermediate) responses of the retriever nodes Rn may differ, e.g., in the degree of detail, in the length, in the accuracy, in the writing style, or in the type of language. In the worst case, some responses may be incorrect.

In an embodiment, the evaluation node E is configured to assign the score based on user feedback to the intermediate responses associated with a query. In an embodiment, the evaluation node E is configured to assign the score based on user feedback to the intermediate responses associated with a respective retriever. The user feedback may thus indicate a user's preference as regards the above parameters and may also filter out wrong answers.

The score may thus be based on user feedback (for each response). That is, the score may be based on the LM score and/or the user feedback.

The LM score and the user feedback may be stored in respective matrices. Further, the evaluation node E may be configured to generate a combined matrix based on the LM score matrix and at least one of the user feedback matrices.

In an embodiment, the evaluation node E is configured to generate a matrix based on average feedback of a user based on the query and the intermediate responses provided by the retriever nodes Rn.

In an embodiment, the evaluation node E is configured to generate a matrix based on average feedback of a user on the intermediate responses provided by the retriever nodes Rn.

In an embodiment, the plurality of retriever nodes Rn are grouped into a plurality of groups. Each group may comprise at least one retriever node Rn.

In an embodiment, the plurality of retriever nodes Rn are configured to generate the intermediate responses in parallel.

Preferably, the plurality of retriever nodes Rn are distributed receivers. Such distributed retrievers may be a plurality of receivers/receiver nodes, e.g., a pool P of retriever nodes Rn, which may be provided to operate in parallel (e.g., simultaneously).

Fig. 2 shows a schematic depiction of a system comprising a pool P of retriever nodes R1, R2, R3, ..., Rn according to an embodiment of the present disclosure.

The pool P contains one or more nodes R1, R2, R3, ..., Rn. The retriever nodes may be singular or grouped into computational environments (in this example, R1 and R2 are grouped together). I.e., the groups may run one or more retrieval nodes/mechanisms R1, R2, R3, ..., Rn. In the following, the term "retriever" may indicate a retriever node or a retrieval mechanism, depending on the context. Further, the retriever nodes will be referred to as "Rn".

Two (and can be generalised for any number of) retriever nodes Rn can run on the same physical machine, sharing the same computational resources. Alternatively, two retriever nodes Rn can run on two different virtual machines (VMs) or lightweight containers running on the same physical machine. Alternatively, two retriever nodes Rn can run in two different physical machines, where each of them has dedicated computational resources. In effect, two retriever nodes Rn - and thus the retrieval mechanisms they encapsulate - can run in parallel, independent of each other. Accordingly, the underlying computations for retrieving contents in response to a query can run in multiple systems, following the distributed computing paradigm. In an embodiment, the only common input they have may be the query and possibly some further configuration parameters. The controller node C may be responsible to direct an input query to the appropriate retrieval nodes Rn, e.g., by using an appropriate HTTP POST request. The following is a hypothetical, illustrative, non-restrictive example of how the controller can send a request with a query string to a particular retriever node Rn running a retrieval mechanism using keywords-based index:

```
 curl --header "Content-Type: application/json" \
  --request POST \
  --data '{"query": "Why is the second LED blinking?", "mechanism: "keyword-
 index"}' \
  http://10.0.0.1:3000/retriever/id/1234/
```

The controller can make multiple such requests and send to multiple retriever nodes Rn. The controller may wait until the responses corresponding to all the requests made are received.

Fig. 2 further shows that an LM node or LLM node is communicatively coupled with the evaluation node E and the retriever nodes Rn (or pool P of retriever nodes Rn).

In an embodiment, the system comprises at least one sensor, device, power equipment, or asset communicatively coupled to the controller node C. The at least one sensor, device, power equipment, or asset may be configured to generate and transmit the query to the controller node C.

The query may be user generated or automatically generated (e.g. event triggered).

The controller node C may be configured to adapt at least one parameter of the sensor, device, power equipment, or asset or of at least one component of the device, power equipment, or asset based on the final response.

Each of the plurality of retriever nodes Rn may use the same or different LM and/or GenAl models, data storages, indices and documents for generating the respective intermediate responses.

In an embodiment, the controller node C (or, as shown in Fig. 2, a further generation node G) may further be configured to generate at least one new retriever node Rn based on the plurality of retriever nodes Rn and/or intermediate responses and/or final responses and/or score and/or LM score. That is, a new retriever node Rn may be generated or existing retriever nodes Rn may be synthesised to form a new one.

The present disclosure further relates to a corresponding method for a retrieval-augmented generation (RAG) system, the system comprising a controller node C configured to receive a query, a plurality of retriever nodes Rn provided in parallel to each other and in communication with the controller node C, an evaluation node E in communication with the plurality of retriever nodes Rn, and a large language model (LM) node in communication with the evaluation node E and the plurality of retriever nodes Rn. The method comprises forwarding, by the controller node C, the query to the plurality of retriever nodes Rn, simultaneously generating, by the plurality of retriever nodes Rn, respective intermediate responses based on the query, receiving, by the evaluation node E, the respective intermediate responses and assigning a score to each of the intermediate responses, generating, by the LM node M, a final response based on the intermediate responses and the assigned score, and receiving and outputting, by the controller node C, the final response.

The present disclosure further relates to a computer program product comprising instructions for execution by at least one processor for configuring the at least one processor to perform the method as outlined above.

The present disclosure further relates to a computer-readable storage medium comprising instructions for execution by at least one processor for configuring the at least one processor to perform the method as outlined above.

Referring again to Fig. 2, a RAG system (distributed retrieval system) according to the present disclosure encompasses a computing environment, in particular a distributed computing environment, comprising a controller node C, one or more retriever nodes Rn, one or more evaluator nodes E, one or more retriever generator nodes G (optionally, may also be substituted by the controller node C) and a performance evaluation database D to store LLM-based evaluations and human feedback (optionally).

Here, "retriever", "retriever node", and "retrieval mechanisms" are used in a generic sense. In general, they encompass the entire process of content extraction from sources, optional splitting into smaller chunks, building one or more index, retrieving content using said index, and generating a response to the user's query. For example, a retriever Rn can be simple retriever involving a single chunking, single indexing, and single response generation technique, among other aspects. Moreover, a retriever Rn can be a complex retriever where multiple indices are used, for example, to generate and synthesise a final response. In addition, although only one language model node M is shown, multiple different LMs/LLMs may be used, potentially for different purposes.

In the embodiment of Fig. 2, the following features may be implemented. Each node may use the same or different LLMs/GenAl models and/or the same or different databases and indices.

All retriever nodes Rn may work with the same set of documents, possibly indexed in different ways. Each retriever node Rn may run one or more different retrieval mechanisms. The controller node C may invoke one or more retriever nodes Rn to retrieve responses for a query.

A retriever node Rn may use one or more retrieval mechanisms to fetch data from indexed documents, uses an LLM to compose an answer, and invokes an evaluator node E to evaluate the retrieval and response. Subsequently, the retriever node may return the response to the controller node C.

The controller node C may display the response. Any human feedback received may be sent to the evaluator node E.

Human feedback/user feedback may be provided via any kind of user interface. For example, the controller node C may collect and process the user feedback.

The evaluator node E may evaluate the correlation between the human feedback and LLM-based evaluations. Based on that, it maps queries or query topics to potential retrievers to be used.

The optional generator node G (or optionally, the controller node) may combine two or more retrieval mechanisms, generate a response, and assign an LLM-based score, in case such a combination is not already available. It may further use GenAl to generate code of a new retrieval mechanism and run that in a retriever node Rn, in case said mechanism is not already available and running.

Based on a user and query topic, the distributed retrieval system thus uses an optimal set of retrievers to retrieve and display an answer to the query.

In other words, referring again to Fig. 2, the system may be configured to perform the following.

When a user submits a query (arrow pointing from "Users" to the controller node C), the controller node C receives it and delegates it to one or more retriever nodes Rn (or retrieval mechanisms). Following the general approach of RAG, each retriever node Rn may generate a response (intermediate response) and optionally fetch content relevant to the query from a data storage D (content database(s) D) for generation of said response. Subsequently, this content along with the original query are sent to a language model node (e.g., an LM/LLM, in the following, an LLM will be assumed) for further processing. Finally, the LM node M generates an appropriate response, which is sent back to the user via the controller node C.

Simultaneously or sequentially, an evaluation node E (evaluator node) evaluates the result. In particular, the evaluation node E may assign a score to each of the retriever nodes' Rn responses (intermediate responses). Said score may be based on users' input (see Table 2 below).

The evaluation may be performed by considering various data as inputs, such as a users' query, the relevant content, and the final response. The evaluation may further be performed by asking an LLM to appropriately assign a quantitative score (LM score) based on a given scale. For any given query and retriever node Rn, the evaluation node E may store the query and the evaluation results (scalar or vector) in a data storage (e.g., an evaluation database). Such database may also store the user feedback and/or other kinds of scoring.

**Table 1**

| | **R1** | **R2** | **...** | **Rn** |
|---|---|---|---|---|
| **Q1** | | | | |
| **Q2** | | | | |
| **...** | | | | |
| **Qm** | | | | |

Table 1 illustrates an exemplary evaluation matrix, L, generated by the evaluation node E. The evaluation matrix contains the LLM scoring (LM score) of the retriever nodes Rn (retrieval mechanisms (R1, R2, ..., Rn) in Fig. 2) for the queries (Q1, Q2, ..., Qm). Since different queries can be executed using different retriever nodes Rn, initially the matrix L can be sparse. As time progresses, one or more idle evaluation nodes E may autonomously convert L into a dense matrix by computing the scores for the empty (Qi, Rj) cells. Therefore, without loss of generality, it may be assumed that at any given time of interest, L has all non-empty cells or values.

In addition to L, the matrix F may store (quantitative) feedback provided by the users (indicated as U1, U2, ..., Uk) on the responses generated for the queries submitted by the respective users, as shown in Table 2 below. This may also be referred to as "score".

**Table 2**

| | **U1** | **U2** | **...** | **Uk** |
|---|---|---|---|---|
| **Q1** | | | | |
| **Q2** | | | | |
| **...** | | | | |
| **Qm** | | | | |

Unlike L, F is usually a sparse matrix, since the users Uk, in general, only provide feedback to the queries asked by them. Additionally or optionally, users Uk can also provide feedback on the retriever nodes Rn, as shown in Table 3 below. For example, users Uk may be presented with responses from different retriever nodes Rn randomly that they can rate based on a numeric scale. In that case, the controller node C may collect the responses and present them to a user for obtaining feedback thereon.

Alternatively, an indirect rating mechanism may be used here. For example, the feedback matrix F, rather than storing only feedback on queries, can store feedback on (query, retriever) pairs. Accordingly, the matrix Ma may be obtained by aggregating the scores from F by retrievers. For example, the value corresponding to Ri and Uj may be obtained as: Ma(Ri, Uj) $= {\sum }_{q = 1}^{m} F \left(Qq, Ri, Uj\right)$.

**Table 3**

| | **U1** | **U2** | **...** | **Uk** |
|---|---|---|---|---|
| **R1** | | | | |
| **R2** | | | | |
| **...** | | | | |
| **Rn** | | | | |

Accordingly, the matrix FMa^{T} denotes the average preference of a user for a given (query, retriever) pair, as shown in Table 4.

**Table 4**

| | **R1** | **R2** | **...** | **Rn** |
|---|---|---|---|---|
| **Q1** | | | | |
| **Q2** | | | | |
| **...** | | | | |
| **Qm** | | | | |

For the purpose of illustration, the matrices here are depicted as two-dimensional matrices. However, they could be higher dimensional tensors. In such a scenario, the computation steps may be appropriately adjusted. Alternatively, such tensors may be aggregated into matrices. In addition, it is assumed that any missing value in any matrix is appropriately interpolated.

On the other hand, the matrix F^{T}L may denote an average user feedback Uk on retriever nodes Rn, as shown in Table 5.

**Table 5**

| | **R1** | **R2** | **...** | **Rn** |
|---|---|---|---|---|
| **U1** | | | | |
| **U2** | | | | |
| **...** | | | | |
| **Uk** | | | | |

The matrices FMa^{T} and F^{T}L may then be used to identify which retriever(s) should be used to execute which query for a given user.

On a high level, the process may include, when an input query from a user is received, determining matrix products from the matrices stored in the evaluation database, map the query to the retriever node(s) Rn and, possibly using data from a configuration database, find a suitable retriever node Rn.

Further, preference mapping or alignment may for example be performed as follows.

In an embodiment, the matrix F^{T}L may identify/indicate the retrievers preferred by a user Uk. For example, for a given user Uk, the retriever nodes Rn are sorted by their scores. Among them, the top-x retrievers whose scores are above a certain threshold are selected for the respective user Uk. A table, T1, may be created to store these mappings for all users Uk.

On the other hand, the matrix FMa^{T} may identify potential retriever nodes Rn to execute a query. A semantic clustering may be performed to map the individual queries into d semantic topics. For each such topic, the top-y retriever nodes Rn whose scores are above a certain threshold may be selected. Another table, T2, may thus be created to store these mappings.

The aforementioned computations are repeated in equal or unequal time intervals to continuously update the preferences. Alternatively, the updates can be triggered when a substantial volume of new data are available.

Choosing a retriever for a user to execute a query may then involve the following steps. Given a query q, the closest semantically similar topic t from the set of d topics is found. Then, the set of retrievers T2(t) from T2 and the set of retrievers T1(u) from T1, where u is the user who submitted the query, are identified.

If the intersection of T1(u) and T2(t) is non-empty, the retriever R* is selected so that R* has the highest score among all the retrievers from the intersection. Otherwise, let R* = arg max {T1(u) U T2(t)}.

Subsequently, R* is used to generate a response for query q by user u.

With multimodal RAG as outlined throughout the application, the following use cases may be envisaged. For example, one can use audio, video, and images directly captured from an Intelligent Electronic Device or IED (or any other relevant equipment), provide it to the application, ask why the device is malfunctioning, and have the application generate an answer based on the multimodal inputs. As another potential extension, the system using the RAG application may also trigger a function to modify the respective device. Furthermore, the content based on which retrieval is performed may be obtained from the real-world devices, e.g., sensor measurements. Thus, the presented RAG system may directly or indirectly use and generate real-world inputs and outputs.

The evaluator may consider human- and LLM-based evaluation scores to build different matrices, which indicate quantitative preference of retrievers for different users and queries. A semantic clustering process may transform the individual queries into topics to simplify the choices. Subsequently, an optimal retriever, identified based on the aforementioned computational steps, is used to generate a response to a query by a given user. In addition, the LLM is also used to optionally generate new retrievers to be used.

The present disclosure may also be provided to only optimise retrieval, not the underlying LLM.

Assuming that a finite number of retrieval mechanisms are available and that each user of the RAG application can be uniquely identified, the present disclosure is capable of identifying which retrieval mechanism(s) should be used for a given user/topic/language, etc.

In other words, the present disclosure is able to identify an efficient retrieval technique and provide relevant information to the LLM and is thus able to automatically tune the application so that it is aligned with user preferences.

In summary, an embodiment of the present disclosure may relate to a distributed retrieval system running retriever nodes (or retrieval mechanisms), evaluator nodes, and a controller node. Users may provide feedback (e.g., as a numerical score) to the responses. This score may be used to measure the average user preference of query-retriever pairs, and/or the average user preference for retrievers. The available queries may be semantically clustered into different topics. Then, the retrievers with the highest scores for each topic are identified and, for a given user and query, the "best" retriever node is used. As outlined in the specification, some of the above steps may be optional.

The system is thus capable of choosing a retriever that is potentially aligned with a situation (i.e., a user, a query, an event).

Further, based on historical reports on legacy products, the tool can support providing services to a customer. By providing better maintenance, a possible life-extension on legacy products may be achieved.

Further, faster responses during critical outages in a power system may be provided, thus reducing outage time of a power system element.

Unless explicitly indicated otherwise, all embodiments disclosed herein are compatible with each other.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analogue implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according to embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organisation.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. Retrieval-augmented generation, RAG, system, comprising:
a controller node configured to receive a query;
a plurality of retriever nodes provided in parallel to each other and communicatively coupled to the controller node;
an evaluation node communicatively coupled to the plurality of retriever nodes; and
a language model, LM, node communicatively coupled to the evaluation node and the plurality of retriever nodes;
wherein:
the controller node is configured to forward the query to the plurality of retriever nodes;
the plurality of retriever nodes are configured to simultaneously generate, based on the query, respective intermediate responses;
the evaluation node is configured to receive the respective intermediate responses and assign a score to each of the intermediate responses; and
the LM node is configured to generate a final response based on the intermediate responses and the assigned score.

2. System according to claim 1, further comprising at least one data storage;
wherein each retriever node is communicatively coupled to at least one of the at least one data storage and configured to generate the response based on data from the data storage.

3. System according to claim 1 or 2, wherein the evaluation node is configured to assign an LM score to each intermediate response; and
wherein the evaluation node is configured to assign the score based on the LM score;
wherein preferably, the LM score is assigned for each query.

4. System according to any one of claims 1 to 3, wherein the evaluation node is configured to assign the score based on user feedback to the intermediate responses associated with a query.

5. System according to any one of claims 1 to 4, wherein the evaluation node is configured to assign the score based on user feedback to the intermediate responses associated with a respective retriever;
wherein preferably, the LM score and the user feedback are stored in respective matrices; and
wherein the evaluation node is configured to generate a combined matrix based on the LM score matrix and at least one of the user feedback matrices.

6. System according to any one of claims 1 to 5, wherein the evaluation node is configured to generate a matrix based on average feedback of a user based on the query and the intermediate responses provided by the retriever nodes; and/or
wherein the evaluation node is configured to generate a matrix based on average feedback of a user on the intermediate responses provided by the retriever nodes.

7. System according to any one of claims 1 to 6, wherein the plurality of retriever nodes are grouped into a plurality of groups; and
wherein each group comprises at least one retriever node.

8. System according to any one of claims 1 to 7, wherein the plurality of retriever nodes are configured to generate the intermediate responses in parallel; and/or
wherein the plurality of retriever nodes are distributed receivers.

9. System according to any one of claims 1 to 8, wherein the system comprises at least one sensor, device, power equipment, or asset communicatively coupled to the controller node; and
wherein the at least one sensor, device, power equipment, or asset is configured to generate and transmit the query to the controller node;
wherein preferably, the query is user generated or automatically generated.

10. System according to any one of claims 1 to 9, wherein the controller node is configured to adapt at least one parameter of the sensor, device, power equipment, or asset or of at least one component of the device, power equipment, or asset based on the final response.

11. System according to any one of claims 1 to 10, wherein each of the plurality of retriever nodes is configured to use the same or different LM and/or GenAl models, data storages, indices and documents for generating the respective intermediate responses.

12. System according to any one of claims 1 to 11, wherein the controller node is configured to receive and output the final response, and/or
wherein the controller node is configured to generate at least one new retriever based on the plurality of retriever nodes and/or intermediate responses and/or final responses and/or score and/or LM score.

13. Method for a retrieval-augmented generation, RAG, system comprising: a controller node configured to receive a query; a plurality of retriever nodes provided in parallel to each other and in communication with the controller node; an evaluation node in communication with the plurality of retriever nodes; and a large language model, LM, node in communication with the evaluation node and the plurality of retriever nodes; wherein the method comprises:
forwarding, by the controller node, the query to the plurality of retriever nodes;
simultaneously generating, by the plurality of retriever nodes, respective intermediate responses based on the query;
receiving, by the evaluation node, the respective intermediate responses and assigning a score to each of the intermediate responses; and
generating, by the LM node, a final response based on the intermediate responses and the assigned score.

14. Computer program product comprising instructions for execution by at least one processor for configuring the at least one processor to perform the method according to claim 13.

15. Computer-readable storage medium comprising instructions for execution by at least one processor for configuring the at least one processor to perform the method according to claim 14.
